Europäisches Patentamt

European Patent Office

Office européen des brevets

(11) Veröffentlichungsnummer: **0 093 958**
**B1**

# (12) EUROPÄISCHE PATENTSCHRIFT

(45) Veröffentlichungstag der Patentschrift:
**12.08.87**

(21) Anmeldenummer: **83104142.1**

(22) Anmeldetag: **28.04.83**

(51) Int. Cl.⁴: **B 01 F 3/08,** B 01 F 5/06,
B 29 B 7/06, B 29 B 7/26

(54) **Mischkopf zum Vermischen mindestens zweier fliessfähiger, bei ihrer Reaktion vorzugsweise Schaumstoff bildender Komponenten.**

(30) Priorität: **06.05.82 DE 3217016**

(43) Veröffentlichungstag der Anmeldung:
**16.11.83 Patentblatt 83/46**

(45) Bekanntmachung des Hinweises auf die Patenterteilung:
**12.08.87 Patentblatt 87/33**

(84) Benannte Vertragsstaaten:
**DE FR GB IT**

(56) Entgegenhaltungen:
**DE-A-2 612 812
DE-A-2 847 504
DE-A-2 907 938
GB-A-907 230**

(73) Patentinhaber: **BAYER AG, Konzernverwaltung RP Patentabteilung, D-5090 Leverkusen 1 Bayerwerk (DE)**

(72) Erfinder: **Ersfeld, Heinrich, Biesenbach 11, D-5090 Leverkusen 3 (DE)**
Erfinder: **Schulte, Klaus, Kurt- Schumacher- Ring 91b, D-5090 Leverkusen (DE)**

## Beschreibung

Die Erfindung betrifft einen Mischkopf zum Vermischen mindestens zweier fließfähiger, bei ihrer Reaktion vorzugsweise Schaumstoff bildender Komponenten, bestehend aus einem Gehäuse, in welchem eine Führungsbohrung für einen Ausstoßkolben angeordnet ist, wobei ein Abschnitt dieser Führungsbohrung als Mischkammer ausgebildet ist, in welche Düsenöffnungen von im Gehäuse einander gegenüberliegend angeordneten Einspritzorganen münden; und welche in der zurückgefahrenen Stellung des Ausstoßkolbens durch dessen Stirnseite begrenzt ist, während auf der gegenüberliegenden Seite die Austrittsöffnung vorgesehen ist, wobei anschließend an die Mischkammer ein Drosselorgan in einer sich quer zur Führungsbohrung und quer zur Richtung der Einspritzorgane erstreckenden Führungsausnehmung bewegbar angeordnet ist und dieses Drosselorgan einen Durchlaß aufweist, dessen Durchlaßquerschnitt mindestens dem Querschnitt des Ausstoßkolbens entspricht und durch dessen Durchlaß der Ausstoßkolben in seine Ausstoßstellung bewegbar ist.

In der DE-AS 2 612 812 (entsprechend US-PS 4 141 470) ist bei einem Mischkopf der eingangs genannten Art das Drosselorgan im Ausführungsbeispiel als Hubschieber ausgebildet, während es gemäß DE-OS 28 47 504 die Form eines Drehschiebers besitzt. In beiden Ausführungsformen dient das Drosselorgan dem gleichen Zweck.

Mischköpfe der genannten Art dienen insbesondere der Erzeugung von Reaktionsgemischen für die Herstellung von Formteilen in Formwerkzeugen. Eine exakte Vermischung der Reaktionskomponenten vom Beginn bis zum Ende des Durchlaufmischvorganges ist Voraussetzung für einwandfreie Formteile.

Die fortschreitende Technik verlangt in zunehmendem Maße die Verarbeitung von Reaktionskomponenten höherer Viskosität und kleinere Durchsatzleistungen bis weit unter 50 g/sec Reaktionsgemisch.

Bei diesen Forderungen macht sich beim vorbekannten Mischkopf nachteilig bemerkbar, daß die Mischkammer, die zwischen Drosselorgan und Ausstoßkolben gebildet ist, für eine einwandfreie Vermischung bei den vorgenannten Forderungen ein zu großes Volumen besitzt.

Eine Verringerung des Mischkammerquerschnittes ist nicht möglich, weil der Durchmesser des Ausstoßkolbens ein gewisses Minimum nicht unterscheiten darf. Zwischen dem Ausstoßkolben und seiner Führungsbohrung baut sich ein dünner, ausreagierter Gemischfilm auf, welcher die Hubbewegung des Kolbens blockieren kann. Bei zu schlankem Ausstoßkolben kann dieser dann durch die aufgebrachte Ausstoßkraft knicken und sogar den Mischkopf zerstören. Um eine Kollision des Ausstoßkolbens mit dem Drosselorgan mit Sicherheit auszuschließen, darf der Reinigungshub des Ausstoßkolbens erst beginnen, nachdem das Drosselorgan die Reinigungsstellung eingenommen hat. Deshalb kann nach dem Schließen der Einspritzdüsen der in der Mischkammer noch vorhandene Gemischrest nicht über die Drosselstelle abströmen und erfährt keine Nachvermischung. Häufig zeigt das Endprodukt eine Fehlerstelle, deren Volumen dem Volumen jenes Gemischrestes entspricht.

Es besteht die Aufgabe, bei Mischköpfen der eingangs genannten Art eine Mischkammer mit möglichst geringem Volumen vorzusehen, um auch bei der Verarbeitung höherviskoser Komponenten sowie bei geringeren Durchsatzleistungen eine einwandfreie Vermischung zu erzielen.

Die Lösung besteht darin, daß sowohl die Führungsausnehmung als auch das Drosselorgan - im Querschnitt gesehen - zur Mischkammer hin eine Verjüngung aufweisen und zwischen die Höhenausdehnung der Einspritzorgane hineinreichen, jedoch die Düsenöffnungen freilassen.

Durch diese Verjüngung wird erreicht, daß das Mischkammervolumen gegenüber der bisherigen Ausführungsform wesentlich verkleinert werden kann. Der ohne Nachvermischung verbleibende Gemischrest ist so klein, daß er im Endprodukt keine Fehlerstelle mehr verursachen kann.

Da der Ausstoßkolben aus oben beschriebenen Gründen einen Mindestdurchmesser aufweisen muß, war nämlich bei der vorbekannten Ausführungsform ein Drosselorgan von solcher Breite bzw. Durchmesser erforderlich, daß beiderseits seines Durchlasses noch genügend starke Materialstege stehen bleiben. Wegen dieser erforderlichen Abmessungen läßt sich das vorbekannte Drosselorgan nicht genügend nahe zu den Düsenöffnungen hin vorsehen, um auf diese Weise das Mischkammervolumen zu verkleinern, weil hierzu die beiderseits der Mischkammer im Gehäuse des Mischkopfes angeordneten Körper der Einspritzorgane im Wege stünden.

Erst die neue Ausführungsform des Drosselorgans bzw. dessen Führungsausnehmung gestattet die erforderliche Verkleinerung der Mischkammer, ohne die bisherigen Vorteile des Drosselorgans zu verlieren.

Vorzugsweise weist die Verjüngung an der der Mischkammer nächstgelegenen Stelle eine maximal dem Durchmesser der Führungsbohrung des Ausstoßkolbens entsprechende Breite auf.

Diese Ausführungsform erlaubt, die Mischkammer auf ein Minimum zu verkleinern, nämlich daß deren Höhe dem Durchmesser der Einspritzöffnungen entspricht. Gestaltet man den Scheitel der Verjüngung noch schmäler, so erweitert sich die Mischkammer gegenüber der soeben beschriebenen Ausführungsform um die beidseitig der Verjüngung gebildeten Taschen. Eine solche zerklüftete Mischkammer kann durchaus im Falle besonders schwer vermischbarer Komponenten für die Vermischung von Vorteil sein. Auch reinigungstechnisch bestehen keine Schwierigkeiten, weil sich die mit dem Reaktionsgemisch in Berührung kommenden Flächen beim Bewegen des Drosselorgans selbst abstreifen bzw. der Ausstoßkolben reinigt die Wandung der Führungsbohrung in bekannter Weise.

Gemäß einer besonderen Ausführungsform kann sich also die Führungsausnehmung und Verjüngung bis nahe an die Düsenöffnungen erstrecken.

Im Falle einer besonders schmalen Verjüngung kann sich diese in Mischstellung des Ausstoßkolbens sogar bis an dessen Stirnfläche erstrecken. Hierbei ist allerdings Voraussetzung, daß die Verjüngung selbst nur soweit quer in die Mischkammer hineinragt, daß die Düsenöffnungen frei bleiben und in das Durchlaßfragment der Verjüngung des Drosselorgans hineinweisen.

Je nach den Vermischungseigenschaften der zu verarbeitenden Komponenten kann sich die eine oder andere Variante als vorteilhafter erweisen.

Es versteht sich, daß die Verjüngung bzw. das gesamte Drosselorgan verschiedene Querschnittsformen aufweisen kann, wobei die zugehörige Führungsausnehmung entsprechend gestaltet ist. Eine zugespitzte, zugespitztabgerundete Form, eine Trapezform, eine Rechteckform, eine Rautenform, sind beispielsweise möglich.

Auch ist es möglich, die der Mischkammer zugewandte Fläche der Verjüngung mit einer in Führungsrichtung verlaufenden Profilierung zu versehen, wie beispielsweise Rillen. Bei entsprechender Gestaltung der Fläche der Führungsausnehmung ist die Abdichtung gewährleistet. Eine solche Profilierung kann den Abfluß des Gemisches aus der Mischkammer in den Durchlaß in Form mehrerer Strömungsarme begünstigen.

Bezüglich der Konstruktion des Mischkopfes ist es nach einer besonderen Ausführungsform vorteilhaft, daß die Verjüngung durch einen dem eigentlichen Drosselorgan zugeordneten Aufsatz gebildet ist. Dieser Aufsatz ist vorzugsweise austauschbar und somit bei Verschleiß erneuerbar.

Vorzugsweise besteht der Aufsatz aus einem Paar voneinander getrennter, den Durchlaß zwischen sich einrahmender Aufsatzstücke.

Bei der Verwendung eines Aufsatzes ist diese Ausführungsform immer dann zwingend, wenn die Verjüngung über ihre gesamte Höhe schmäler ist als der Durchmesser der Mischkammer bzw. des Ausstoßkolbens.

Nach einer besonderen Ausführungsform ist der Aufsatz auf dem eigentlichen Drosselorgan verschiebbar angeordnet und ihm ist ein Verstellorgan zugeordnet, welches nur während der Drosselstellung des eigentlichen Drosselorgans eine von dessen Durchlaß abweichende Stellung seines Durchlasses erlaubt.

Durch diese Maßnahme ist es möglich, zum Erzielen besonders günstiger Misch- und Strömungsbedingungen die Durchlässe von Aufsatz und eigentlichem Drosselorgan gegeneinander zu versetzen.

Nach einer besonderen Ausführungsform ist ein Aufsatzstück des Paares am eigentlichen Drosselorgan fixiert.

Diese Ausführungsform erlaubt eine Veränderung der Größe des Durchlasses des Aufsatzes. Eine Verkleinerung ist allerdings nur dann möglich, wenn die Verjüngung über ihre gesamte Höhe schmäler ist als der Durchmesser der Mischkammer.

Vorzugsweise ist jedem Aufsatzstück des Paares ein separates Verstellorgan zugeordnet.

Durch diese Maßnahme sind dem Fachmann weitere Einstellmöglichkeiten zur Einflußnahme auf die Strömungsbedingungen gegeben.

Nach einer weiteren besonderen Ausführungsform besteht der Aufsatz aus mehreren parallel übereinander angeordneten und relativ zueinander verschiebbaren Platten. Diese Ausführungsform ermöglicht ein kaskadenartiges Einstellen des Durchlasses, wobei durch Ausbildung einzelner Platten als Paare bei deren selbständiger Einstellmöglichkeit innerhalb des Durchlasses auch mehrere Drosselstellen erzeugt werden können.

Es versteht sich, daß die neuartige Ausbildung des Drosselorgans mit Durchlaß sowohl auf die Ausführung als Hubschieber als auch auf der Ausführung als Drehschieber mit allen Varianten anwendbar ist.

In einer Zeichnung ist der neuartige Mischkopf mit einem als Hubschieber ausgebildeten Drosselorgan in mehreren Ausführungsbeispielen mit dem Drosselorgan in Drosselstellung rein schematisch dargestellt und nachstehend näher erläutert. Es zeigen:

Fig. 1 den Mischkopf gemäß einem ersten Ausführungsbeispiel im Längsschnitt,

Fig. 2 den Mischkopf im Schnitt gemäß Linie A/B in Fig. 1,

Fig. 3 das Drosselorgan dieses Mischkopfes in der Draufsicht,

Fig. 4 eine zweite Ausführungsform des Mischkopfes im Längsschnitt,

Fig. 5 den Mischkopf gemäß Linie C/D in Fig. 4,

Fig. 6 den Mischkopf in einer dritten Ausführungsform im Längsschnitt und

Fig. 7 bis 12 das Drosselorgan in verschiedenen möglichen Ausführungsformen im Querschnitt und räumlicher Darstellung.

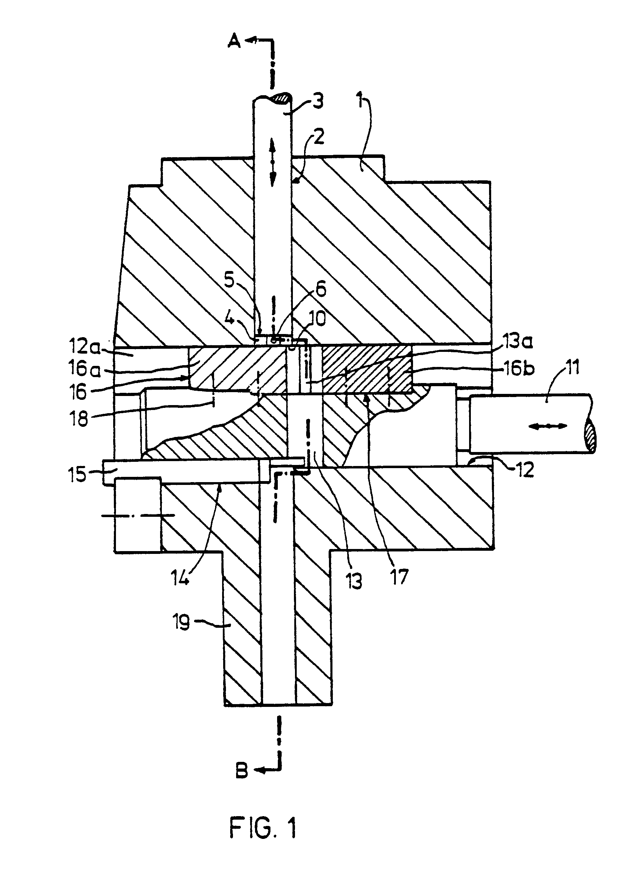

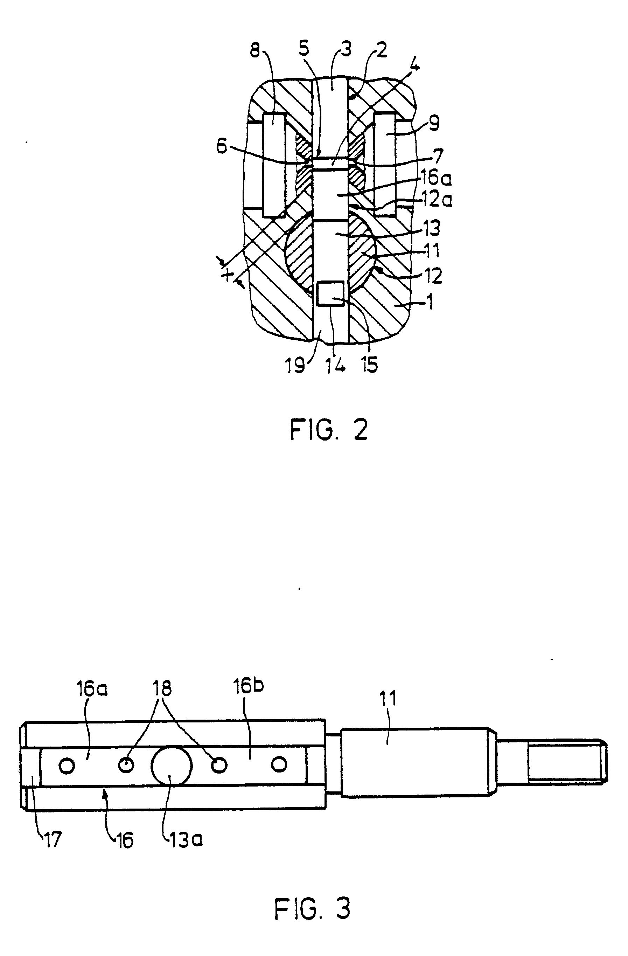

In Fig. 1 bis 3 besteht der Mischkopf aus einem Gehäuse 1, in welchem eine Führungsbohrung 2 für einen angedeutet dargestellten Ausstoßkolben 3 angeordnet ist. Ein Abschnitt dieser Führungsbohrung 2 ist als Mischkammer 4 ausgebildet, welche durch die Stirnseite 5 des Ausstoßkolbens 3 in dessen Mischstellung begrenzt ist. In die Mischkammer 4 münden die Düsenöffnungen 8,7 von einander gegenüberliegenden Einspritzorganen 8,9. Die Austrittsöffnung 10 der Mischkammer 4 ist mittels eines Drosselorgans 11 gebildet. Dieses Drosselorgan 11 ist in einer sich quer zur Richtung der Einspritzdüsen 5,9 erstreckenden Führungsausnehmung 12 bewegbar angeordnet. Es weist einen Durchlaß 13 auf, dessen Durchlaßquerschnitt mindestens dem Querschnitt des Ausstoßkolbens 3 entspricht, d.h. die Querschnittsform des Durchlasses 13 ist der Querschnittsform des Ausstoßkolbens 3 angepaßt. Zwischen den Einspritzorganen 8,9 und der Führungsausnehmung 12 bleiben genügend starke Stege X stehen, so daß ein Verziehen des Gehäuses 1 durch den Mischdruck und damit evtl. verbundenes Undichtwerden oder unerwünschte Querkraft auf den Ausstoßkolben vermieden werden. Das Drosselorgan 11 ist mittels Nut 14 und Feder 15 gegen Verdrehen gesichert. Zur Mischkammer 4 hin besitzt das Drosselorgan 11 eine als Aufsatz ausgebildete Verjüngung 16. Diese ist der Führungsausnehmung 12 in ihrem Teil 12a angepaßt. Der Aufsatz 16 besteht aus einem Paar Aufsatzstücken 16a, 16b. Die Aufsatzstücke 16a,16b umrahmen den sich durch den Aufsatz 16 erstreckenden Teil 13a des Durchlasses 13. Die Aufsatzstücke 16a,16b sind als in eine Nut 17 eingreifende Federn ausgebildet und mittels Schrauben 18 lösbar befestigt. Mit 19 ist das Auslaufrohr bezeichnet. Ausstoßkolben 3 und Drosselorgan 11 sind hydraulisch in aufeinander abgestimmter Weise betätig und steuerbar.

Auf eine Darstellung des Mischkopfes mit dem Drosselorgan 11 und dem Ausstoßkolben 3 in Reinigungsstellung kann wohl verzichtet werden, da es für den Fachmann aufgrund seiner Kenntnis der Funktion des Ausstoßkolbens 3 ohne weiteres auf der Hand liegt, daß in der Reinigungsstellung der Durchlaß 13 bzw. 13a mit der Führungsbohrung 2 fluchten muß.

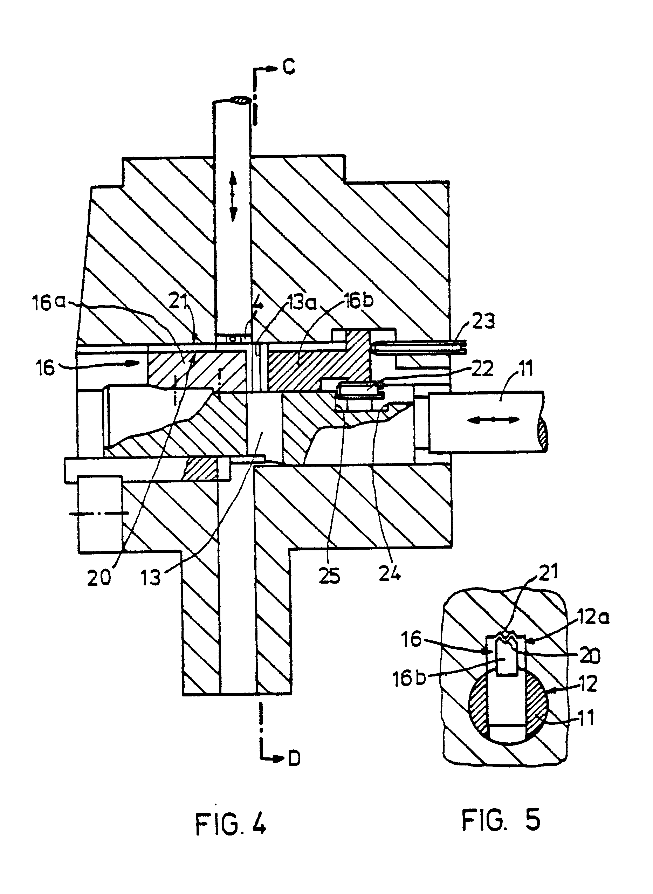

In den Fig. 4,5 entspricht der Aufbau des Mischkopfes im wesentlichen demjenigen des Mischkopfes gemäß Fig. 1 bis 3, so daß insoweit in der nachfolgenden Beschreibung die gleichen Bezugzeichen benutzt worden sind und nur auf die Abweichungen eingegangen worden ist:

Das Drosselorgan 11 bzw. der Aufsatz 16 besitzt auf seiner der Mischkammer 4 zugewandten Fläche eine in Bewegungsrichtung des Drosselorgans 11 weisende Profilierung 20. Die entsprechende Gegenfläche des dem Aufsatz 16 zugewandten Teiles 12a der Führungsausnehmung 12 ist zum Zwecke der Abdichtung mit einer korrespondierenden Profilierung 21 versehen. Die Breite des Aufsatzes 16 ist geringer als der Durchmesser der Mischkammer 4. Das Aufsatzstück 16a ist fest angeordnet, während das Aufsatzstück 16b mittels als Verstellorgan dienenden Schrauben 22,23 und Anschlägen 24,25 derart einstellbar ist, daß während des Mischvorganges der Durchlaß 13a geringeren Querschnitt aufweist als der restliche Durchlaß 13 des eigentlichen Drosselorgans 11. In der nicht dargestellten Reinigungsstellung des Drosselorgans 11 hingegen bildet das Aufsatzstück 16b mit der Führungsbohrung 2 eine geschlossene Fläche.

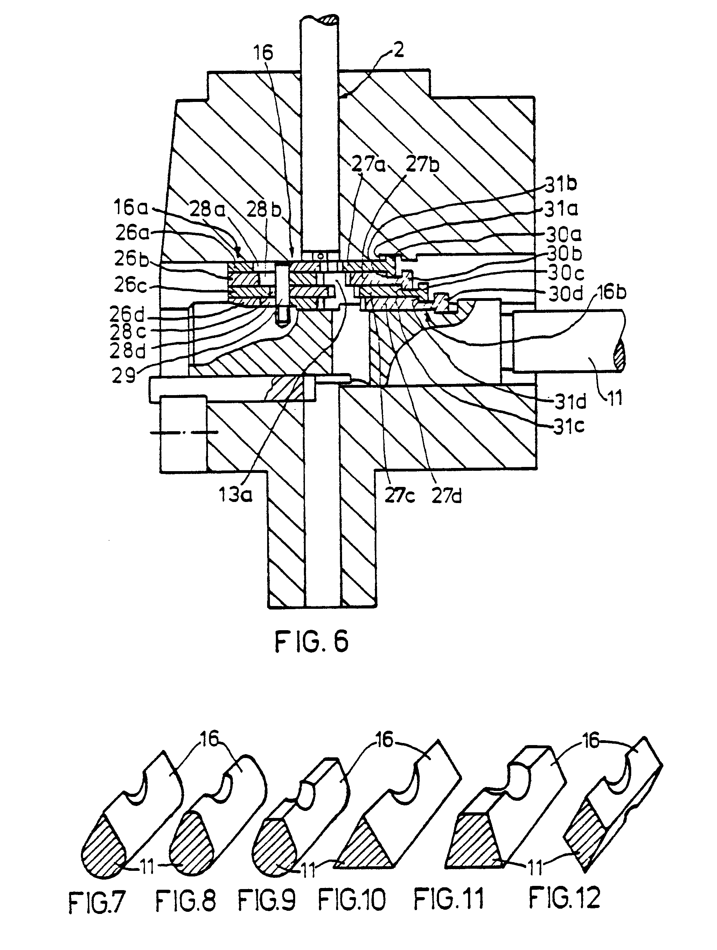

Auch die Ausführungsform des Mischkopfes gemäß Fig. 6 unterscheidet sich von den bisher beschriebenen Mischköpfen nur geringfügig, so daß auch hier die bisherigen Bezugzeichen verwendet worden sind und nur die entsprechenden Abweichungen nachstehend beschrieben sind:

Der Aufsatz 16 des Drosselorgans 11 besteht hier ebenfalls aus zwei Aufsatzstücken 16a, 16b, wobei jedoch jedes Aufsatzstück 16a, 16b aus mehreren parallel übereinander angeordneten Platten 26a, 26b, 26c, 26d und 27a, 27b, 27c, 27d aufgebaut ist. Die Platten 26a, 26b, 26c, 26d weisen unterschiedlich lange, auf den Hub des Drosselorgans 11 und auf dessen gewünschte Versetzung abgestimmte Langlöcher 28a, 28b, 28c, 28d auf, durch welche ein Mitnehmerstift 29 hindurchreicht. Mitnehmerstift 29 und Langlöcher 28a, 28b, 28c, 28d wirken derart zusammen, daß das Aufsatzstück 16a zum Durchlaß 13a hin die gewünschte Kontur aufweist, während in der Reinigungsstellung die zum Durchlaß 13a weisenden Flächen mit der Führungsbohrung 2 fluchten. Die Platten 27a, 27b, 27c, 27d des Aufsatzstückes 16b weisen Mitnehmernasen 30a, 30b, 30c, 30d und Anschläge 31a, 31b, 31c, 31d auf. In Mischstellung des Drosselorgans 11 besitzt der Durchlaß 13a des Aufsatzes 16 über seine Höhe gesehen entsprechend der Stellung der einzelnen Platten 26a, 26b, 26c, 26d und 27a, 27b, 27c, 27d unterschiedliche Querschnitte bzw. Abstufungen.

Für die Gestaltung von Drosselorganen mit Verjüngung ergeben sich für den Fachmann die verschiedenartigsten Möglichkeiten unter Berücksichtigung der Forderung, daß zu den Einspritzorganen hin aus konstruktiven Gründen genügend starke Materialstege des Gehäuses stehenbleiben müssen. Eine Auswahl möglicher Ausführungsformen, denen selbstverständlich entsprechende Führungsausnehmungen zugeordnet sein müssen, ist nachstehend gezeigt:

Fig. 7 zeigt ein als Hubschieber ausgebildetes Drosselorgan 11, welches zusammen mit seiner Verjüngung 16 aus einem Stück gefertigt ist, wobei die Verjüngung 16 Dreiecksform aufweist. Je steiler und höher die Verjüngung 16 ist, desto weiter kann sie zwischen die Einspritzorgane hineinreichen.

Beim Drosselorgan 11 gemäß Fig. 8 ist die Verjüngung 16 im Querschnitt gesehen parabelförmig gestaltet bzw. weist die Form eines Dreiecks mit abgerundeter Spitze auf. Gemäß Fig. 9 weist die Verjüngung 16 im Querschnitt Trapezform auf.

Das Drosselorgan 11 gemäß Fig. 10 ist insgesamt dreiecksförmig ausgebildet.

Gemäß Fig. 11 besitzt das Drosselorgan 11 Trapezform.

Das Drosselorgan 11 gemäß Fig. 12 zeigt einen rautenförmigen Querschnitt.

Die Ausführungsform des Mischkopfes mit einem als Drehschieber ausgebildeten Drosselorgan liegt für den Fachmann auf der Hand. Die Achse des Drosselorgans muß dabei parallel zu der gemeinsamen Achse der Einspritzorgane angeordnet sein. Die Verjüngung ist dann als Ring oder zumindest als Ringsegment ausreichender Länge auf dem Mantel des Drehschiebers derart anzuordnen, daß sie unterhalb der Einspritzöffnungen in die Führungsbohrung in gewünschter Weise eingreifen kann.

**Patentansprüche**

1. Mischkopf zum Vermischen mindestens zweier fließfähiger, bei ihrer Reaktion vorzugsweise Schaumstoff bildender Komponenten, bestehend aus einem Gehäuse (1), in welchem eine Führungsbohrung (2) für einen Ausstoßkolben (3) angeordnet ist, wobei ein Abschnitt dieser Führungsbohrung (2) als Mischkammer (4) ausgebildet ist, in welche Düsenöffnungen (6, 7) von im Gehäuse (1) einander gegenüberliegend angeordneten Einspritzorganen (8, 9) münden; und welche in der zurückgefahrenen Stellung des Ausstoßkolbens (3) durch dessen Stirnseite (5) begrenzt ist, während auf der gegenüberliegenden Seite eine Austrittsöffnung (10) vorgesehen ist, wobei anschließend an die Mischkammer (4) ein Drosselorgan (11) in einer sich quer zur Führungsbohrung (2) und quer zur Richtung der Einspritzorgane (8, 9) erstreckenden Führungsausnehmung (12) bewegbar angeordnet ist und dieses Drosselorgan (11) einen Durchlaß (13) aufweist, dessen Durchlaßquerschnitt mindestens dem Querschnitt des Ausstoßkolbens (3) entspricht und durch dessen Durchlaß (13) der Ausstoßkolben (3) in seine Ausstoßstellung bewegbar ist, dadurch gekennzeichnet, daß sowohl die Führungsausnehmung (12) als auch das Drosselorgan (11) - im Querschnitt gesehen - zur Mischkammer (4) hin eine Verjüngung (16) aufweisen und zwischen die Höhenausdehnung der Einspritzorgane (8, 9) hineinreichen, jedoch die Düsenöffnungen (6, 7) freilassen.

2. Mischkammer nach Anspruch 1, dadurch gekennzeichnet, daß die Verjüngung (16) an der der Mischkammer (4) nächstgelegenen Stelle eine maximal dem Durchmesser der Führungsbohrung (2) des Ausstoßkolbens entsprechende Breite aufweist.

3. Mischkopf nach Ansprüchen 1 oder 2, dadurch gekennzeichnet, daß sich Führungsausnehmung (12) und Verjüngung (16) bis nahe an die Düsenöffnungen (6, 7) erstrecken.

4. Mischkopf nach einem der Ansprüche 1 bis 3, dadurch gekennzeichnet, daß die Verjüngung (16) durch einen dem eigentlichen Drosselorgan (11) zugeordneten Aufsatz (16) gebildet ist.

5. Mischkopf nach Anspruch 4, dadurch gekennzeichnet, daß der Aufsatz (16) aus einem Paar voneinander getrennter, den Durchlaß (13a) zwischen sich einrahmender Aufsatzstücke (16a, 16b) besteht.

6. Mischkopf nach Ansprüchen 4 oder 5, dadurch gekennzeichnet, daß der Aufsatz (16) auf dem eigentlichen Drosselorgan (11) verschiebbar angeordnet ist und daß ihm ein Verstellorgan (28a, 28b, 28c, 28d, 29; 30a, 30b, 30c, 30d; 31a, 31b, 31c, 31d) zugeordnet ist, welches nur während der Drosselstellung des eigentlichen Drosselorgans (11) eine von dessen Durchlaß (13) abweichende Stellung seines Durchlasses (13a) erlaubt.

7. Mischkopf nach Anspruch 6, dadurch gekennzeichnet, daß ein Aufsatzstück (16a) des Paares am eigentlichen Drosselorgan (11) fixiert ist.

8. Mischkopf nach Anspruch 6, dadurch gekennzeichnet, daß jedem Aufsatzstück (16a, 16b) des Paares ein separates Verstellorgan (28a, 28b, 28c, 28d; 29; 30a, 30b, 30c, 30d; 31a, 31b, 31c, 31d) zugeordnet ist.

9. Mischkopf nach einem der Ansprüche 4 bis 8, dadurch gekennzeichnet, daß der Aufsatz (16) aus mehreren, parallel übereinander angeordneten und relativ zueinander verschiebbaren Platten (26a, 26b, 26c, 26d; 27a, 27b, 27c, 27d) besteht.

10. Mischkopf nach einem der Ansprüche 1 bis 9, dadurch gekennzeichnet, daß die der Mischkammer (4) zugewandte Fläche des Drosselorgans (11) bzw. Verjüngung (16) sowie die korrespondierende Fläche (12a) der Führungsausnehmung (12) mit in Bewegungsrichtung des Drosselorgans (11) weisenden Profilierungen (20, 21) versehen sind.

**Claims**

1. Mixing head for mixing at least two flowable components, preferably forming a foam during their reaction, consisting of a housing (1), in which a guide bore (2) is positioned for a discharge piston (3), one section of this guide bore (2) being designed as a mixing chamber (4), into which nozzle openings (6, 7) of injection members (8, 9), positioned opposite eash other in the housing (1), discharge; and which, in the returned position of the discharge piston (3), is bounded by the front end (5) of the latter, while an outlet opening (10) is provided on the opposite side, and a choke member (11) is movably positioned adjacent to the mixing chamber (4) in a guide recess (12) extending transversely to the guide bore (2) and transversely to the direction of the injection members (8, 9), and this choke member (11) has a passage (13), the passage cross section of which at least corresponds to the cross section of the discharge piston (3), and the discharge piston (3) may be moved into its discharge position through this passage (13), characterised in that both the guide recess (12) and the choke member (11) have - viewed cross-sectionally - a taper (16) towards the mixing chamber (4) and extend between the height extension of the injection members (8, 9), but leave the nozzle openings (6, 7) clear.

2. Mixing chamber according to claim 1, characterised in that the maximum width of the taper (16) at the point closest to the mixing chamber (4) corresponds to the diameter of the guide bore (2) of the discharge piston.

3. Mixing head according to claims 1 or 2, characterised in that the guide recess (12) and the taper (16) extend closely up to the nozzle openings (6, 7).

4. Mixing head according to one of claims 1 to 3, characterised in that the taper (16) is formed by an attachment (16) allocated to the actual choke member (11).

5. Mixing head according to claim 4, characterised in that the attachment (16) consists of a pair of separate attachment pieces (16a, 16b) which frame the passage (13a) between them.

6. Mixing head according to claims 4 or 5, characterised in that the attachment (16) is positioned in a displaceable manner on the actual choke member (11) and an adjusting member (28a, 28b, 28c, 28d, 29; 30a, 30b, 30c, 30d; 31a, 31b, 31c, 31d) is allocated thereto which allows a position of its passage (13a) which differs from the passage (13 ) of the choke member (11) only during the choke position of the actual choke member (11).

7. Mixing head according to claim 6, characterised in that one attachment piece (16a) of the pair is fixed to the actual choke member (11).

8. Mixing head according to claim 6, characterised in that a separate adjusting member (28a, 28b, 28c, 28d; 29; 30a, 30b, 30c, 30d; 31a, 31b, 31c, 31d) is allocated to each attachment piece (16a, 16b).

9. Mixing head according to one of claims 4 to 8, characterised in that the attachment (16) consists of several plates (26a, 26b, 26c, 26d; 27a, 27b, 27c, 27d) which are positioned parallel one on top of another and may be displaced relative to each other.

10. Mixing head according to one of claims 1 to 9, characterised in that the surface of the choke member (11) or of the taper (16) facing the mixing chamber (4), and the corresponding surface (12a) of the guide recess (12) are provided with profilings (20, 21) pointing in the direction of movement of the choke member (11).

## Revendications

1. Tête de mélange pour mélanger au moins deux composants fluides formant, lors de leur réaction, de préférence un matériau mousse, constituée d'un carter (1) dans lequel est disposé un alésage de guidage (2) pour un piston d'éjection (3), et étant précisé qu'un tronçon de cet alésage de guidage (2) est conçu sous forme de chambre de mélange (4) dans laquelle des ouvertures de buses (6, 7) débouchent d'organes d'injection (8, 9) disposés en face l'un de l'autre et qui, dans la position en rétraction du piston d'éjection (3), est limitée par la face frontale (5) de ce piston, tandis que sur la face opposée est prévue une ouverture de sortie (10), étant précisé qu'à côté de la chambre de mélange (4) est disposé un organe d'étranglement (11) qui peut se déplacer dans un évidement de guidage qui s'étend transversalement par rapport à l'alésage de guidage (2) et transversalement par rapport a la direction des organes d'injection (8, 9); et étant précisé que cet organe d'étranglement (11) présente un passage (13) dont la section de passage correspond au moins à la section du piston d'éjection (3) et à travers le passage (13) duquel le piston d'éjection (3) peut se déplacer pour venir dans sa position d'éjection, caractérisée en ce qu'aussi bien l'évidement de guidage (12) que l'organe d'étranglement (11) - vu en coupe - présentent, en direction de la chambre de mélange (4), une partie qui va en diminuant (16) et parviennent, en hauteur, entre les organes d'injection (8, 9), tout en dégageant les ouvertures de buses (6, 7).

2. Chambre de mélange selon la revendication 1, caractérisée en ce que la partie qui va en diminuant (16) présente, à l'emplacement le plus proche de la chambre de mélange (4), une largeur qui correspond au maximum au diamètre de l'alésage de guidage (2) du piston d'éjection.

3. Tête de mélange selon les revendications 1 ou 2, caractérisée en ce que l'évidement de guidage (12) et la partie qui va en diminuant (16) s'étendent jusqu'au voisinage des ouvertures des buses (6, 7).

4. Tête de mélange selon l'une des revendications 1 à 3, caractérisée en ce que la partie qui va en diminuant (16) est formée par une garniture (16) rapportée sur l'organe d'étranglement proprement dit (11).

5. Tête de mélange selon la revendication 4, caractérisée en ce que la garniture (16) est constituée d'une paire d'éléments de garniture (16a, 16b) distincts l'un de l'autre et encadrant entre eux le passage (13a).

6. Tête de mélange selon la revendication 4 ou 5, caractérisée en ce que la garniture (16) est disposée sur l'organe d'étranglement proprement dit (11) avec possibilité de coulissement; et en ce qu'il lui correspond un organe de réglage (28a, 28b, 28c, 28d, 29; 30a, 30b, 30c, 30d; 31a, 31b, 31c, 31d) qui n'autorise une position de son passage (13a) qui s'écarte du passage (13) de l'organe d'étranglement qu'en position d'étranglement de l'organe d'étranglement proprement dit (11).

7. Tête de mélange selon la revendication 6, caractérisée en ce qu'un élément de garniture (16a) de la paire est fixé à l'organe d'étranglement proprement dit (11).

8. Tête de mélange selon la revendication 6, caractérisée en ce qu'à chaque élement de garniture (16a, 16b) de la paire correspond un organe de réglage distinct (28a, 28b, 28c, 28d; 29; 30a, 30b, 30c, 30d; 31a, 31b, 31c, 31d).

9. Tête de mélangé selon l'une des revéndications 4 à 8, caractérisée en ce que la garniture est constituée de plusieurs plaques (26a, 26b, 26c, 26d; 27a, 27b, 27c, 27d) qui sont disposées parallèlement l'une au-dessus de l'autre et peuvent coulisser relativement l'une à l'autre.

10. Tête de mélange selon l'une des revendications 1 à 8, caractérisée en ce que la surface de l'organe d'étranglement (11) et de sa partie qui va en diminuant (16) tournée vers la chambre de mélange (4), ainsi que la surface correspondante (12a) de l'évidement de guidage (12) sont munies de profilages (20, 21) dirigés dans la direction des mouvements de l'organe d'étranglement (11).

FIG. 1

0 093 958

FIG. 2

FIG. 3

3

FIG. 4

FIG. 5

FIG. 6

FIG.7    FIG.8    FIG.9    FIG.10    FIG.11    FIG.12